# EUROPEAN PATENT SPECIFICATION

(11) **EP 1 272 818 B1**
(45) Date of publication and mention of the grant of the patent: **07.01.2009**
(21) Application number: 00992330.1
(22) Date of filing: 10.11.2000
(51) Int. Cl.: G01F 1/30

(54) **FINE PARTICLE FLOWMETER**
FEINPARTIKEL-STRÖMUNGSMESSER
DEBITMETRE POUR PARTICULES FINES

(30) Priority: 12.11.1999 US 165377 P
(43) Date of publication of application: 08.01.2003
(73) Proprietor: Brandt, Robert O., Jr., Wilmington, NC 28412 (US)
(72) Inventor: Brandt, Robert O., Jr., Wilmington, NC 28412 (US)
(74) Representative: Prinz & Partner
(86) International application number: PCT/US2000/042028
(87) International publication number: WO 2001/038833

(56) References cited:
- US-A- 2 872 074
- US-A- 3 613 449
- US-A- 3 640 136
- US-A- 3 945 532
- US-A- 4 122 715
- US-A- 5 230 251

## Description

### Field of the Invention

This invention relates generally to the field of weighing systems and more particularly to systems that weigh streams of fine powdered particles.

### Background of the Invention

It is known that the flow rate and mass of a stream of moving material such as a fluid or stream of particles can be very accurately measured using a flowmeter such as is disclosed in my prior United States Patent number 5,230,251. The aforementioned patent discloses a curved guide which is mounted for pivotal movement along which the fluid flows. The system generates an output signal which is proportional to the flow rate (or mass).

While the foregoing system works extremely well with materials that flow easily, it is a well known problem in the art that very fine powders normally do not flow smoothly enough to be measured by devices such as described above. Very fine particles (less than about 100 microns in diameter) have microscopic spurs on their surface and as the particle mass decreases, the surface area increases. When the spurs grapple each other clumping occurs and the flow stream becomes intermittent or is interrupted altogether.

U.S. 3,619,449 discloses an impact flow meter for powdery and granular materials. The flow meter comprises an impact-receptive detecting plate for receiving a powdery or granular material dropped from a predetermined height and a wiper for keeping the plate clean and preventing deposition of the dropping material.

In view of the foregoing, it would be of commercial value to provide a small particle flowmeter which would make the mass/flow rate thereof accurately measurable.

It is accordingly an object of present invention to provide an improved flowmeter.

Another object of the present invention is to provide a flowmeter through which fine particles flow.

Yet another object of the present invention is to provide a fine particle flowmeter which is reliable.

Still another object of the present invention is to provide a fine particle flowmeter that has a high degree of accuracy.

A still further object of the present invention is to provide a fine particle flowmeter which can be used both as a flowmeter and as a scale.

### Summary of the Invention

To accomplish the foregoing objects, there is provided an apparatus for 1 measuring the flow rate of a stream of material composed of fine particles as set out in claim 1 characterized by the ability to maintain an even flow of the material and to accurately measure the flow of the moving stream. The apparatus comprises an elongate guide means for guiding the stream of material along a predetermined path. The guide means includes an entry end and an exit end and is mounted for pivotal movement about a pivot point. In certain embodiments, the pivot point is located so that a line drawn through the pivot point and the guide is at right angles to the average centrifugal force component of the stream of material and further wherein the line is parallel to the average friction force component of the stream of material on the guide means. In addition, the pivot point is located outside and remote from the stream of material to produce an electrical output signal that is free of signals induced by friction and is an accurate representation of the flow rate of the stream of material. In addition, a transducer is operatively associated with the guide for converting the force exerted by the stream of material on the guide into an electrical signal representative thereof. Also provided is a vibration source for vibrating the guide to keep the particle stream moving and wherein the plane of vibration is perpendicular to the plane of measurement.

### Brief Description of the Drawings

Some of the features and advantages of the invention having been briefly described, others will appear from the detailed description which follows, when taken in connection with the accompanying drawings in which:
Figure 1 is a schematic side view of the flow meter of the present invention and showing a hopper of fine particles comprising a flow stream to be weighed being dispensed on to the guide means.
Figure 2 is a schematic diagram illustrating the forces exerted on the guide means by particles being dropped onto and traveling along the guide means.

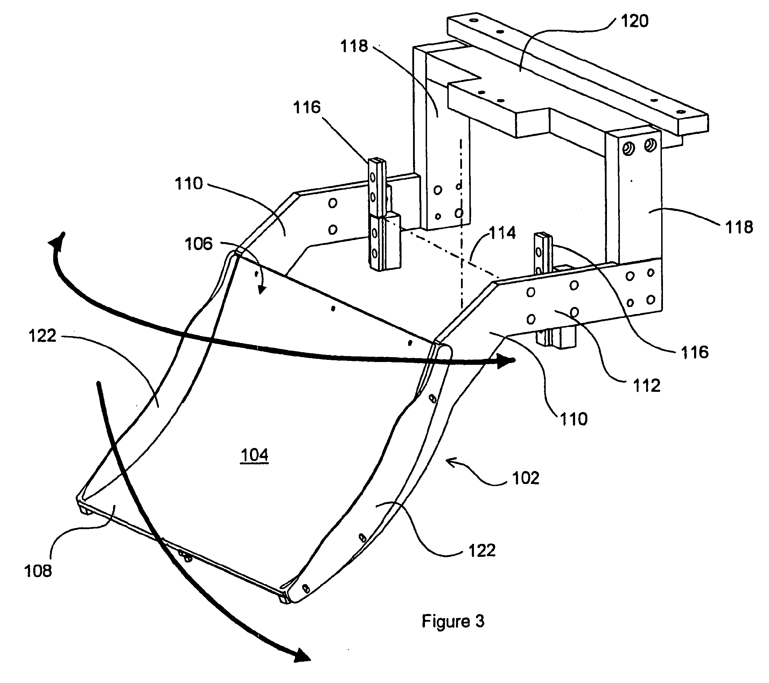

Figure 3 is a front perspective view of the apparatus according to the present invention.

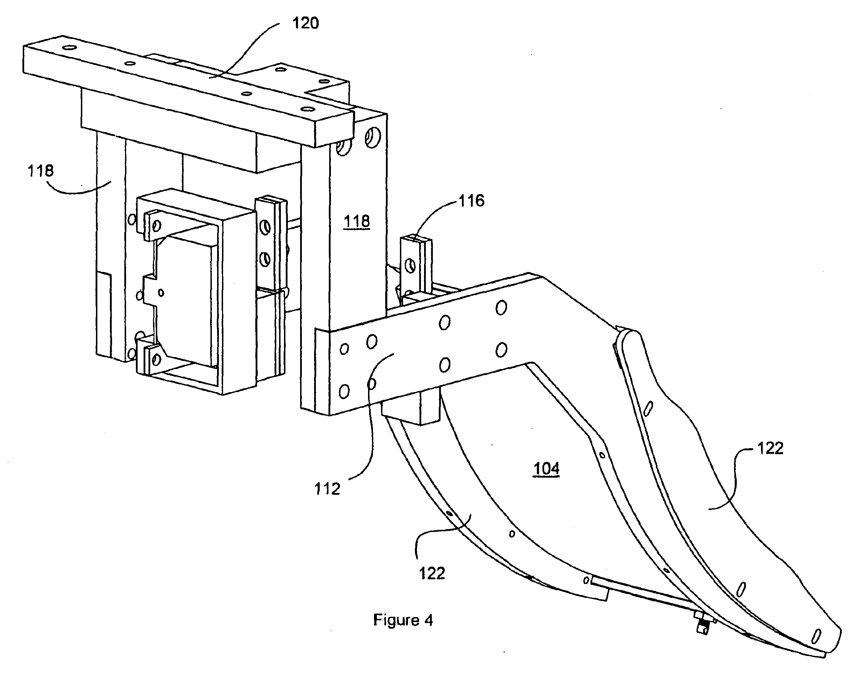

Figure 4 is a rear perspective view of the apparatus according to the present invention.

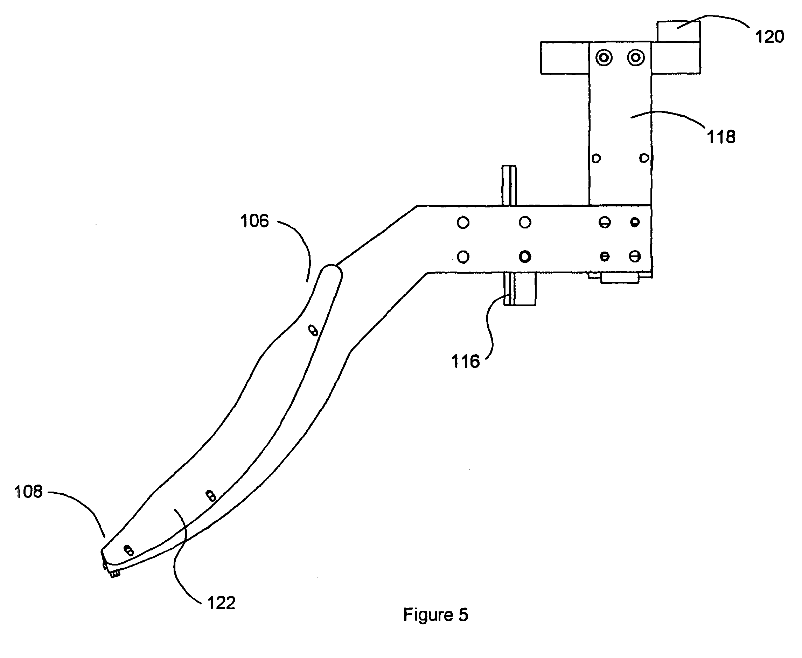

Figure 5 is a side view of the apparatus according to the present invention.

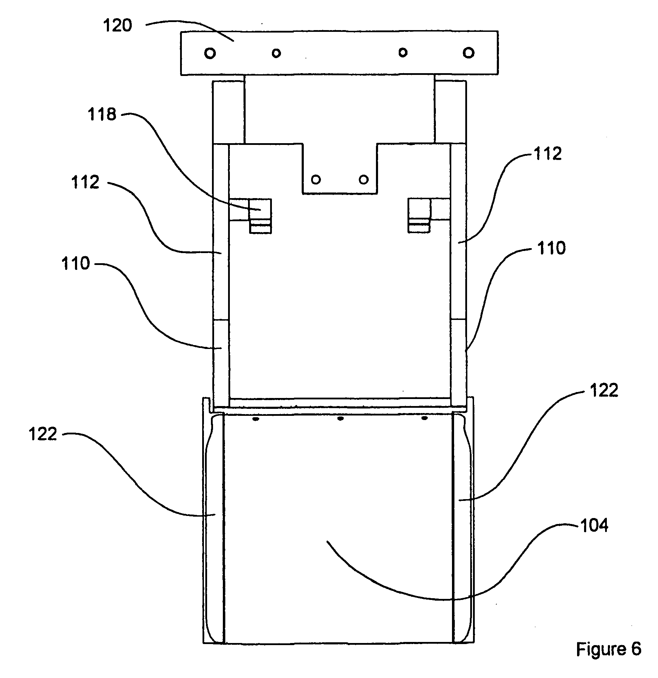

Figure 6 is a top view of the apparatus according to the present invention.

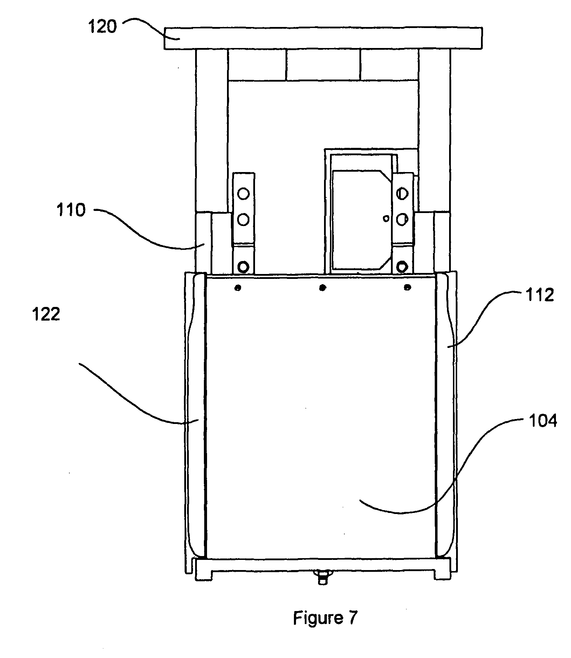

Figure 7 is a front view of the apparatus according to the present invention.
Figure 8 is a sectional view of the apparatus according to the present invention showing the guide means on one side of a wall and the measurement portion of the apparatus on the opposite side.
Figure 9 is a side view of the transducer system according to the present invention.
Figure 10 is a side view of one embodiment the transducer means.
Figure 11 is a schematic diagram of the transducer output signal being integrated to calculate the mass or flow rate of particles being conveyed according to the present invention.

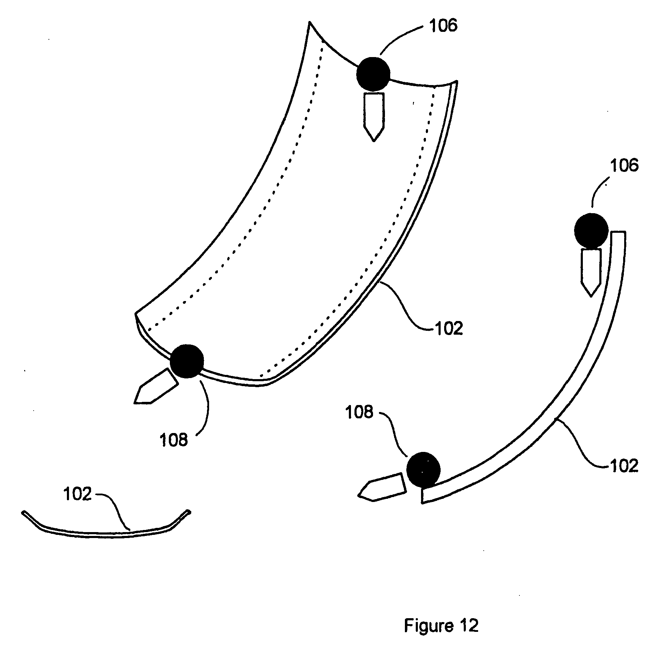

Figure 12 is a perspective view of the pan according to the present invention.

### Detailed Description of the Preferred Embodiment

While the present invention will be described more fully hereinafter with reference to the accompanying drawings, in which a particular embodiment is shown, it is to be understood at the outset that persons skilled in the art may modify the invention herein described while still achieving the favorable results of this invention. Accordingly, the description which follows is to be understood as a broad teaching disclosure directed to persons of skill in the appropriate arts and not as limiting upon the present invention.

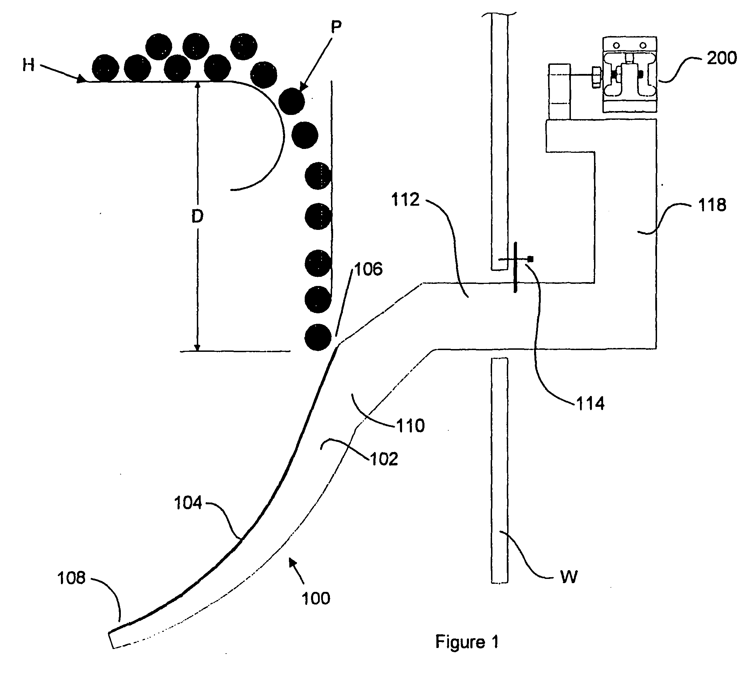

Referring now to the figure 1, the flowmeter of the present invention is there illustrated. In that figure, a stream of material comprised of particles P is stored in a schematically shown dispensing hopper H that is positioned a predetermined distance D above the point of contact of the particles P on the flowmeter, generally indicated at 100. The flowmeter 100 comprises an elongate guide means 102 and a transducer means generally indicated at 200.

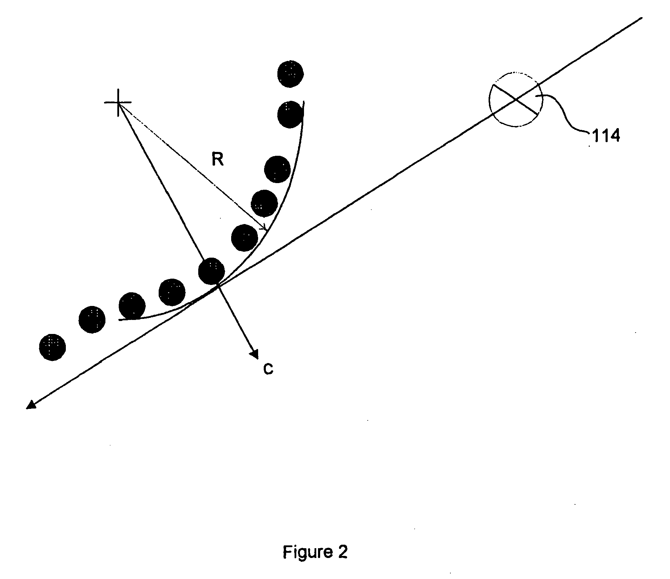

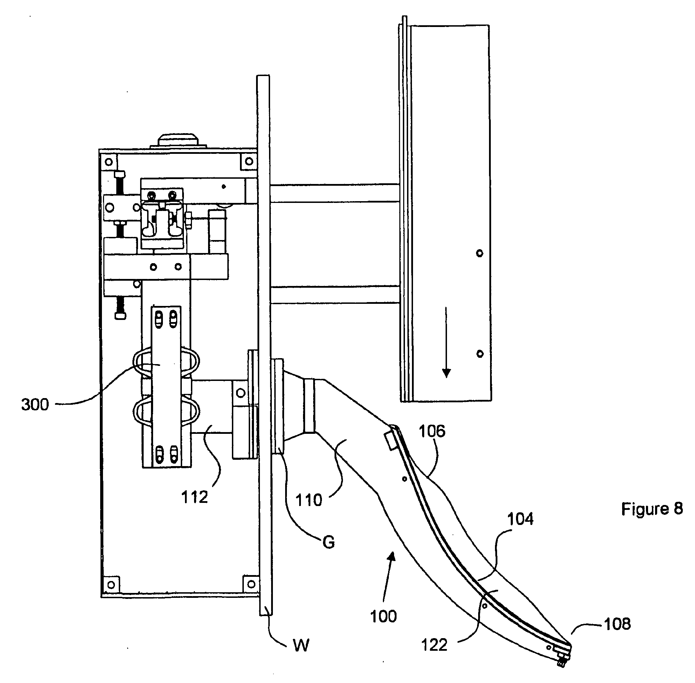

The guide means or guide 102 is provided for guiding the stream of material along a predetermined path. The guide 102 includes a pan 104 having an entry end 106 and an exit end 108. The pan 104 is curved along the portion that extends between the entry and exit ends 106,108. In addition, a straight arm section 110 extends upwardly from the entry end 106 and which terminates in an extension arm 112 which has located along its length a pivot point 114. A pair of brackets 116 are connected to the extension arm 112 and are mounted to a wall W through which one end of the extension arm extends. An extension member 118 is connected at right angles to the end of each of extension arms 112 and a connecting member 120 is connected therebetween. The wall W (best shown in figure 8) is provided to separate the pan section which comes into contact with the flow stream from the measurement section. A gasket G can be placed around the extension arm 112 where it passes through wall W to physically separate the flow stream from the measurement apparatus. It is desirable to minimize the mass of the guide 102, and it is therefore preferably fabricated out of a sturdy lightweight material, such as aluminum, plastic, stainless steel, titanium etc. Also, it is necessary that the particles stay on the guide 102 as they move there along in order to maximize measurement accuracy, so side walls 122 are provided. An important feature of the guide 102 resides in the relation between the pivot point 114 and the tangential force component of the stream of material as it contacts and travels along guide 102. Specifically, the guide 102 is shaped so that a line drawn through the pivot point and the guide is at right angles to the average centrifugal force component C of the stream of material, the line being parallel to the average friction force component of the steam of material on the guide means, and further wherein the pivot point is outside of and remote from the stream of material on the guide. In this manner, the average friction force component of the particle traversing the guide is equal to an opposite of the force exerted on the pivot, thus, canceling each other and yielding a force component that is related only to the mass of the stream of material. This principle is illustrated in the force diagram of figure 2. It is contemplated that the present invention may be incorporated into other systems wherein measurement is accomplished via means different from those employed herein, and that the pivot point need not be located as described hereinabove in order for the present invention to operate effectively.

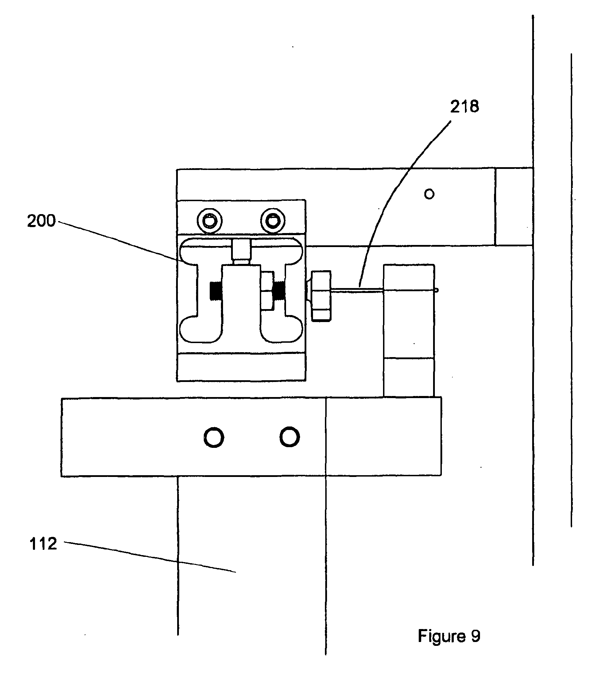

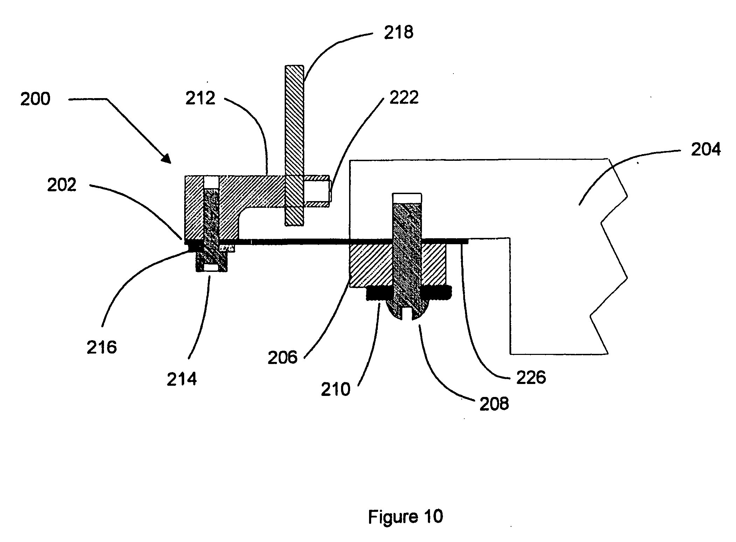

As best shown in 10, the weighing apparatus also includes a transducer means or force sensing system generally indicated at 200 operatively associated with the guide 102 for converting the force exerted by the stream of material on the guide into an electrical signal representative thereof. The transducer means includes a load cell means or weigh beam 202 that is secured to a mounting base 204 through a beam mounting block 206. An attaching screw 208 extends through beam mounting block 206 and with the assistance of a washer 210 secures beam mounting block 206 and beam 202 to the mounting base 204 of the force sensing/measurement system 200. The system as shown in figure 9 is similar to that shown in figure 10, except that deflection of the pan causes a pulling on column 218 which, in turn, results in deformation of a parallelogram type piezoelectric 224 which outputs a signal Vₒ that is integrated and which correlates to the mass and/or flow rate.

Secured to the opposite end of the weigh beam 202 is a mounting bracket 212 which is secured to weigh beam 202 via screw 214 and associated washer 216.

A column means or displacement transfer link 218 is provided for communicating the force exerted by the stream of material on the guide 102 to the load cell. The column has a first end that is connected to the guide proximate the end of extension arm 112 and a second end that is adjustably mounted with bracket 220 by set screw 222. Column 218 extends upwardly over the central portion of the weigh beam 202. This arrangement is commonly referred to as an S-loaded weigh beam which yields greater force multiplication as bending of the beam affects two locations and, therefore, exaggerates loading on the sensor as will be more fully described hereinbelow. It will be noted, that the benefits and advantages of the present invention can be achieved with equal efficacy when other beam loading arrangement such as cantilevers are employed.

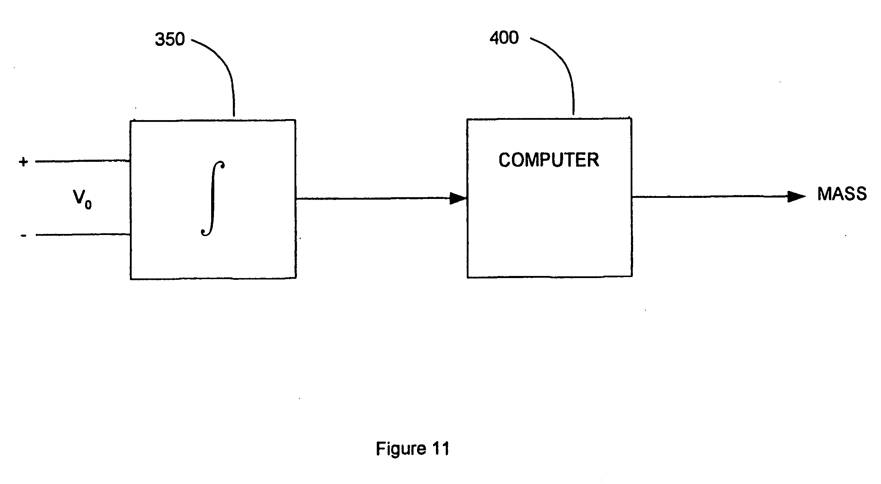

Turning now to figures 9 through 11, the load cell or weigh beam 202 according to the present invention is there illustrated. The load cell 202 is characterized by its ability to accurately measure applied forces greater than about two milliseconds, and to produce an output signal that is a function of the applied force that is substantially free of resonant vibration. The transducer 200 comprises a substrate or beam member 202 and a strain gauge 224.

The beam member 202 comprises an elongate substantially flat substrate having a first surface 202a and a second surface 202b.

A strain gauge means or strain gauge 224 is mounted to one of the surfaces (in the illustrated embodiment surface 202a). The preferred strain gauge is a semiconductor or metal foil Wheatsone bridge, well known to those skilled in the art. The strain gauge and beam member units are usually purchased preassembled as an off the shelf unit from suppliers such as Omega electronics (see for example, part numbers LCL 454G and LCL 113G). As the Wheatstone bridge generates four output signals, four output wires 226 are provided.

A means for vibrating the guide or vibrator 300 is connected by conventional means to member 118. A hopper vibrator such as is available from Cleveland Vibrator of Cleveland, Ohio may be employed. The vibrator 300 is mounted such that the plane of vibration is 90 degrees from the plane of measurement. The vibrational energy produced keeps the particles from sticking to one another and the placement of the plane of vibration perpendicular to the plane of measurement prevents error from being introduced into the weight and/or flow rate measurement. The vibrator is tuned to vibrate at a preselected resonating frequency which is a multiple of the line frequency, as determined by the selected input voltage. It will be evident to those skilled in the art that the vibrator may be incorporated into other mass/flow rate measurement systems.

In operation, the particles P in the stream of material are dispensed from the hopper or other dispensing apparatus on to the guide means 102 and contact tangentially thereon. This causes a slight flexure at the pivot point and movement of extension arm 112 which in turn, is transmitted through the columnn 34 to the load cell causing a proportional deformation of weigh beam 202. The deformation of weigh beam 202 then causes a similar deformation in the strain gauge 224 which produces an electrical output signal Vout in lines 226 that is proportional to the force exerted on guide 102. This electrical signal is then integrated in integrator 350 and output to a computing means or computer 400 in order to calculate the mass of the stream of material according to methods well known to those skilled in the art.

In another application of the present invention, the apparatus described above may also be employed as a continuous flowmeter. Instead of a weighable unit being dispersed on to the guide means 102, the guide means is subjected to a continuous flow of material. If the flow of the material is constant, the column 218 will deform proportionally and similarly will cause a steady-state (constant) output signal Vout to be output on lines 226 from the load cell. Any variation in flow rate will be observed as a variation in output signal Vout. This Vout may be digitally sampled and the information output to a control device such as a computer 400 that can be used to adjust the system as needed in order to return to the optimal flow rate.

The foregoing embodiments and examples are to be considered illustrative, rather than restrictive of the invention, and those modifications which come within the meaning and range of equivalence of the claims are to be included therein.

## Claims

1. An apparatus for measuring the flow rate of a stream of a material composed of fine particles, the apparatus comprising:
an elongate curved guide means (102) for guiding the stream of material along a predetermined path, said guide means (102) including an entry end (106) and an exit end (108), said guide means (102) being mounted for pivotal movement about a pivot point (114); and
a transducer means (200) operatively associated with said guide means (102) for converting a force exerted by the stream of material on the guide means (102) into an electrical signal representative thereof,
**characterized in that** the apparatus further comprises a means (300) for vibrating said guide means (102) at a resonating frequency in a plane of vibration perpendicular to the plane of measurement.

2. The apparatus according to claim 1, wherein the pivot point (114) is outside of and remote from the guide means (102) and the predetermined path along which the stream of material is guided.

3. The apparatus according to claim 1 including a mechanical column (218) operatively associated with the guide means (102), the mechanical column (218) having a first end and a second end, the first end of said column (218) being connected proximate the entry end (106) of the guide means (102), and a load cell (202) having a proximal end and a distal end for converting an applied mechanical force, and wherein the distal end of said load cell (202) is operatively associated with the second end of said mechanical column (218) and the proximal end of said load cell (202) is adapted to be connected to a mounting block.

4. The apparatus according to claim 3, wherein the load cell (202) is operable to convert an input signal in the form of said applied mechanical force into an electrical output signal that is a function of the applied mechanical force.

5. The apparatus according to claim 3 or claim 4, wherein the column (218) is operable to communicate the force exerted by the stream of material on said guide means (102) to said load cell (202) means.

6. The apparatus according to any one of claims 3 to 5, wherein the load cell (202) comprises:
(a) an elongate substantially flat substrate having a first surface (202a) and a second surface (202b); and
(b) a strain gauge means (224) mounted to one of said surfaces (202a, 202b), said strain gauge means (224) including output means (226) for providing an electrical output signal as a function of the force applied to said substrate.

7. The apparatus according to claim 6 further including a damping means coating at least a portion of one of said surfaces (202a, 202b), whereby the applied force acting to deform the load cell (202) is translated into an electrical output signal that is a function of flow rate.

8. The apparatus according to claim 7, wherein said strain gauge means (224) produces an electrical output signal that is substantially proportional to the force applied to said substrate.

9. The apparatus according to any one of claims 6 to 8, wherein said strain gauge (224) comprises a metal foil strain gauge.

10. The apparatus according to any one of claims 6 to 8, wherein said strain gauge (224) comprises a semiconductor strain gauge.

11. The apparatus according to any one of claims 6 to 8, wherein the strain gauge (224) comprises a sputtered strain gauge.

12. The apparatus according to any one of claims 6 to 8, wherein the strain gauge (224) comprises a bridge circuit.

13. The apparatus according to claim 7, wherein said damping means comprises a viscoelastic polymer.

14. The apparatus according to claim 7, further including a second substrate and wherein said damping means is positioned in a sandwich fashion between said substrate and said second substrate and bonding said substrates together.

15. The apparatus according to any preceding claim, further including a computing means (400) for calculating the flow rate of the stream of material.

16. The apparatus according to any preceding claim, wherein the guide means is adapted such that the stream of material can enter the guide means (102) proximate its entry end (106) and a point of initial contact of the stream of material is tangential to the entry end (106) of the guide means (102).

## Patentansprüche

1. Vorrichtung zur Messung des Durchsatzes eines Stroms eines aus feinen Partikeln bestehenden Materials, wobei die Vorrichtung Folgendes aufweist:
ein langgestrecktes, gekrümmtes Führungsmittel (102) zur Führung des Materialstroms entlang einem vorbestimmten Weg, wobei das Führungsmittel (102) ein Eintrittsende (106) und ein Austrittsende (108) aufweist und wobei das Führungsmittel (102) schwenkbar um einen Drehpunkt (114) angebracht ist; und
ein Sensormittel (200), das wirkungsmäßig dem Führungsmittel (102) zugeordnet ist, um eine von dem Materialstrom auf das Führungsmittel (102) ausgeübte Kraft in ein sie repräsentierendes elektrisches Signal umzuwandeln,
**dadurch gekennzeichnet, dass** die Vorrichtung ferner ein Mittel (300) aufweist, um das Führungsmittel (102) mit einer Resonanzfrequenz in einer zur Messebene senkrechten Schwingungsebene in Schwingung zu versetzen.

2. Vorrichtung nach Anspruch 1, bei welcher der Drehpunkt (114) außerhalb des Führungsmittels (102) und des vorbestimmten Wegs liegt, entlang dem der Materialstrom geführt ist, und von diesen beabstandet ist.

3. Vorrichtung nach Anspruch 1, die eine mechanische Strebe (218) aufweist, welche wirkungsmäßig dem Führungsmittel (102) zugeordnet ist, wobei die mechanische Strebe (218) ein erstes Ende und ein zweites Ende aufweist, wobei das erste Ende der Strebe (218) nahe dem Eintrittsende (106) des Führungsmittels (102) angeschlossen ist, und eine Lastzelle (202) mit einem proximalen Ende und einem distalen Ende zur Umwandlung einer aufgebrachten mechanischen Kraft, und bei der das distale Ende der Lastzelle (202) wirkungsmäßig dem zweiten Ende der mechanischen Strebe (218) zugeordnet ist und das proximale Ende der Lastzelle (202) mit einem Befestigungsblock verbunden sein kann.

4. Vorrichtung nach Anspruch 3, bei der die Lastzelle (202) so betrieben werden kann, dass sie ein Eingangssignal in Form der aufgebrachten mechanischen Kraft in ein elektrisches Ausgangssignal umwandelt, das von der aufgebrachten mechanischen Kraft abhängig ist.

5. Vorrichtung nach Anspruch 3 oder Anspruch 4, bei der die Strebe (218) so betrieben werden kann, dass sie die von dem Materialstrom auf das Führungsmittel (102) ausgeübte Kraft zum Lastzellenmittel (202) überträgt.

6. Vorrichtung nach einem der Ansprüche 3 bis 5, bei der die Lastzelle (202) Folgendes aufweist:
(a) ein langgestrecktes, im Wesentlichen flaches Substrat mit einer ersten Fläche (202a) und einer zweiten Fläche (202b); und
(b) ein Dehnungsmessstreifenmittel (224), das an einer der Flächen (202a, 202b) angebracht ist, wobei das Dehnungsmessstreifenmittel (224) Ausgabemittel (226) aufweist, um ein elektrisches Ausgangssignal als Funktion der auf das Substrat aufgebrachten Kraft bereitzustellen.

7. Vorrichtung nach Anspruch 6, die ferner ein Dämpfungsmittel aufweist, mit dem zumindest ein Teil einer der Flächen (202a, 202b) überzogen ist, wodurch die aufgebrachte Kraft, die so wirkt, dass die Lastzelle (202) verformt wird, in ein elektrisches Ausgangssignal umgesetzt wird, das vom Durchsatz abhängig ist.

8. Vorrichtung nach Anspruch 7, bei der das Dehnungsmessstreifenmittel (224) ein elektrisches Ausgangssignal erzeugt, das im Wesentlichen proportional zu der auf das Substrat aufgebrachten Kraft ist.

9. Vorrichtung nach einem der Ansprüche 6 bis 8, bei welcher der Dehnungsmessstreifen (224) einen Metallfolien-Dehnungsmessstreifen umfasst.

10. Vorrichtung nach einem der Ansprüche 6 bis 8, bei welcher der Dehnungsmessstreifen (224) einen Halbleiter-Dehnungsmessstreifen umfasst.

11. Vorrichtung nach einem der Ansprüche 6 bis 8, bei welcher der Dehnungsmessstreifen (224) einen durch Sputtern aufgebrachten Dehnungsmessstreifen umfasst.

12. Vorrichtung nach einem der Ansprüche 6 bis 8, bei welcher der Dehnungsmessstreifen (224) eine Brückenschaltung umfasst.

13. Vorrichtung nach Anspruch 7, bei der das Dämpfungsmittel ein viskoelastisches Polymer umfasst.

14. Vorrichtung nach Anspruch 7, die ferner ein zweites Substrat aufweist und bei der das Dämpfungsmittel sandwichartig zwischen dem Substrat und dem zweiten Substrat angeordnet ist und die Substrate miteinander verbindet.

15. Vorrichtung nach einem der vorhergehenden Ansprüche, die ferner ein Rechenmittel (400) aufweist, um den Durchsatz des Materialstroms zu berechnen.

16. Vorrichtung nach einem der vorhergehenden Ansprüche, bei der das Führungsmittel so ausgelegt ist, dass der Materialstrom nahe dem Eintrittsende (106) des Führungsmittels (102) in dieses eintreten kann und eine Stelle des ersten Kontakts des Materialstroms tangential zum Eintrittsende (106) des Führungsmittels (102) ist.

## Revendications

1. Appareil pour mesurer le débit d'un flux d'une matière composée de particules fines, l'appareil comportant :
un moyen de guidage (102) allongé et courbe pour guider le flux de matière le long d'un trajet prédéterminé, le moyen de guidage (102) présentant une extrémité d'entrée (106) et une extrémité de sortie (108), et le moyen de guidage (102) étant monté à pivotement autour d'un point de pivotement (114) ; et
un moyen capteur (200) associé au moyen de guidage (102) de manière fonctionnelle pour convertir une force exercée sur le moyen de guidage (102) par le flux de matière en un signal électrique la représentant,
**caractérisé en ce que** l'appareil comporte en outre un moyen (300) pour faire vibrer le moyen de guidage (102) à une fréquence de résonance dans un plan de vibration perpendiculaire au plan de mesure.

2. Appareil selon la revendication 1, dans lequel le point de pivotement (114) se trouve à l'extérieur et à distance du moyen de guidage (102) et du trajet prédéterminé le long duquel le flux de matière est guidé.

3. Appareil selon la revendication 1, comportant un montant mécanique (218) associé de manière fonctionnelle au moyen de guidage (102), le montant mécanique (218) présentant une première extrémité et une deuxième extrémité, la première extrémité du montant (218) étant reliée à proximité de l'extrémité d'entrée (106) du moyen de guidage (102), et une cellule de charge (202) présentant une extrémité proximale et une extrémité distale pour convertir une force mécanique appliquée, et dans lequel l'extrémité distale de la cellule de charge (202) est associée de manière fonctionnelle à la deuxième extrémité du montant mécanique (218), et l'extrémité proximale de la cellule de charge (202) peut être reliée à un bloc de fixation.

4. Appareil selon la revendication 3, dans lequel la cellule de charge (202) peut être actionnée pour convertir un signal d'entrée, sous forme de la force mécanique appliquée, en un signal de sortie électrique qui est fonction de la force mécanique appliquée.

5. Appareil selon la revendication 3 ou la revendication 4, dans lequel le montant (218) peut être actionné pour transmettre la force exercée par le flux de matière sur le moyen de guidage (102) au moyen de cellule de charge (202).

6. Appareil selon l'une des revendications 3 à 5, dans lequel la cellule de charge (202) comporte :
(a) un substrat allongé et sensiblement plat qui présente une première surface (202a) et une deuxième surface (202b) ; et
(b) un moyen de jauge de contrainte (224) monté sur l'une des surfaces (202a, 202b), le moyen de jauge de contrainte (224) présentant des moyens de sortie (226) pour fournir un signal de sortie électrique qui est fonction de la force appliquée sur le substrat.

7. Appareil selon la revendication 6, comportant en outre un moyen amortisseur recouvrant au moins un partie de l'une des surfaces (202a, 202b), la force appliquée agissant de manière à déformer la cellule de charge (202) étant convertie en un signal de sortie électrique qui est fonction du débit.

8. Appareil selon la revendication 7, dans lequel le moyen de jauge de contrainte (224) génère un signal de sortie électrique qui est sensiblement proportionnel à la force appliquée sur le substrat.

9. Appareil selon l'une des revendications 6 à 8, dans lequel la jauge de contrainte (224) comprend une jauge de contrainte à feuille métallique.

10. Appareil selon l'une des revendications 6 à 8, dans lequel la jauge de contrainte (224) comprend une jauge de contrainte à semi-conducteur.

11. Appareil selon l'une des revendications 6 à 8, dans lequel la jauge de contrainte (224) comprend une jauge de contrainte déposée par pulvérisation cathodique.

12. Appareil selon l'une des revendications 6 à 8, dans lequel la jauge de contrainte (224) comprend un circuit en pont.

13. Appareil selon la revendication 7, dans lequel le moyen amortisseur comprend un polymère viscoélastique.

14. Appareil selon la revendication 7, comportant en outre un deuxième substrat et dans lequel le moyen amortisseur est positionné en sandwich entre le substrat et le deuxième substrat et relie les substrats l'un à l'autre.

15. Appareil selon l'une des revendications précédentes, comportant en outre un moyen de calcul (400) pour calculer le débit du flux de matière.

16. Appareil selon l'une des revendications précédentes, dans lequel le moyen de guidage est conçu de telle sorte que le flux de matière peut pénétrer dans le moyen de guidage (102) à proximité de son extrémité d'entrée (106), et un point de contact initial du flux de matière est tangentiel à l'extrémité d'entrée (106) du moyen de guidage (102).
